# DEMANDE DE BREVET EUROPEEN

(11) **EP 1 235 037 A2**
(43) Date de publication de la demande: **28.08.2002**
(21) Numéro de dépôt: 01811190.6
(22) Date de dépôt: 06.12.2001
(51) Int. Cl.: F24D 3/16

(54) **Elément thermorégulateur préfabriqué.**

(30) Priorité: 23.02.2001 CH 13222001
(71) Demandeur: Novakov, Dusan, 1955 Chamoson (CH)
(72) Inventeur: Novakov, Dusan, 1955 Chamoson (CH)

(57) **Abrégé**

La présente invention se rapporte à un mur thermorégulateur préfabriqué(18), qui comprend un noyau en béton(4) coulé avec un dispositif tubulaire et protégé extérieurement par d'épaisses isolations(6+17) insérées simultanément au coulage; le tout constitue un mur porteur(18).

Elle se rapporte également au dispositif tubulaire composé de deux distributeurs horizontaux (inférieur(7) et supérieur(1)) reliés par des canaux verticaux(3).

Les tubes fixés(15) dans le distributeur inférieur(7) permettent la circulation d'un fluide chaud, ainsi l'air en contact avec ceux-ci se réchauffe et monte au travers des canaux verticaux(3) ce qui tempère le mur et par rayonnement la pièce.

Il en va de même pour les tubes(2) du distributeur supérieur(1) par lesquels circule un fluide froid qui refroidit l'air et abaisse la température ambiante.

## Description

La présente invention concerne un mur thermorégulateur préfabriqué muni d'un dispositif tubulaire permettant la régulation de la température ambiante.
La présente invention est destiné aussi bien aux constructions récentes qu'aux rénovations.

Le domaine de l'économie d'énergie nécessite non seulement la fabrication d'appareils sophistiqués, mais également de systèmes radiants de transmission d'énergie permettant de chauffer ou refroidir les bâtiments.

La présente invention vise à proposer un système de transmission d'énergie par un mur thermorégulateur préfabriqué.

A cet effet, l'invention a pour objet un dispositif de transport énergétique comprenant un collecteur inférieur composé de plusieurs tubes transportant un fluide chauffé permettant ainsi de réchauffer l'air qui monte au travers des canaux et par-là même de chauffer la paroi du mur, ce qui permettra d'obtenir par rayonnement la température ambiante souhaitée. Ce dispositif est également constitué d'un collecteur supérieur comprenant plusieurs tubes transportant un fluide froid permettant de refroidir l'air qui descendra au travers des canaux et par-là même refroidira la paroi du mur, ce qui permettra d'abaisser par rayonnement la température ambiante.
La température du mur ne dépend pas uniquement de la température du fluide chauffé mais aussi de la valeur du coefficient global de transmission thermique,( souhaitable < 0.12 w/m²K), soit de l'isolation en elle-même.
Dans la présent innovation, l'isolation insérée lors du coulage du béton est automatiquement fixée dans ce dernier lors du séchage, de plus des crochets mécaniques optimalisent une fixation parfaite et durable, ce qui permet d'obtenir simultanément le coffrage
(découpé auparavant dans l'isolation préfabriquée) pour le coulage du pilier permettant d'utiliser les murs thermorégulateurs comme murs porteurs pour les maisons individuelles et bâtiments à plusieurs étages. Les piliers peuvent être disposés de telle manière que la construction présente une parfaite résistance au phénomène sismique.

Les différents types d'isolation et leur épaisseur permettent d'obtenir un mur d'une parfaite isolation thermique.
Le béton coulé représente une surface parfaitement lisse, ne nécessitant plus aucune intervention au niveau de la finition lors de la construction, ce qui engendre une réduction considérable du coût.
Pour différentes régions climatiques il est possible de couler le béton sur des plaques en terre cuite extrêmement plates et lisses. On obtient ainsi un mur permettant un autorégulation partielle de l'humidité de la pièce. Le béton conservera dans ce cas sa masse accumulatrice tout en maintenant sa bonne capacité de transmission énergétique.
Les murs composés d'une grande de surface de rayonnement et d'une excellente isolation permettent au fluide chauffant de circuler à une basse température, d'où l'économie d'énergie primaire étant donné un très bon COP, obtenu par une pompe à chaleur.
Les basses températures ainsi maintenues pour chauffer un mur ne représentent aucun risque de chocs thermiques pouvant provoquer des fissures.
Ce type de construction représente un confort maximal au niveau du bien-être.

En ce qui concerne la préfabrication du mur en usine, il est possible d'obtenir des murs d'une hauteur d'étage allant jusqu'à trois mètres et d'une longueur de neuf mètres par pièce. Il en découle un énorme gain de temps au niveau du montage et une consommation minimale de matériel (béton, fer, isolation ) pour la préfabrication ce qui constitue une excellente gestion des déchets.

L'isolation préfabriquée, assemblée au béton , est à la base du système tubulaire et du système d'évidement pour le coulage des piliers, mais constitue aussi le coffrage isolant du pourtour de la dalle.

Ce mur déjà coulé avec le pilier pourra être utilisé comme élément de toiture préfabriqué ; les piliers faisant office de poutres. La masse de la «paroi » préfabriquée représente une nette protection contre le bruit vu l'utilisation toujours plus fréquente des combles comme volume habitable.

L'avantage du système de chauffage par mur thermorégulateur se présente surtout dans le concept de chauffage d'habitations passives dans lesquelles le sol est maintenu froid afin de permettre un meilleur stockage de l'énergie solaire ce qui accroît le gain d'énergie.

Les dessins annexés illustrent une forme de mise en oeuvre de l'invention. Ceux-ci n'ont aucun caractère limitatif.
La fig. 1 est une coupe verticale représentant le mur thermorégulateur inséré entre la dalle inférieure et la dalle supérieure.
La fig. 2 est une coupe horizontale du mur thermorégulateur représentant la fixation mécanique de l'isolation au béton coulé ainsi que les évidements destinés au coulage des piliers.
La fig. 3 est une coupe horizontale du mur thermorégulateur représentant le béton coulé sur des plaques en terre cuite.
La fig. 4 est une coupe verticale du mur thermorégulateur représentant le béton coulé à sa largeur statique nécessaire sans isolation.
La fig. 5 est une coupe horizontale du mur thermorégulateur représentant la fixation mécanique de l'isolation au béton coulé, les évidements destinés au coulage des piliers ainsi que les évidements destinés au transport d'énergie.
La fig. 6 est une coupe verticale représentant le mur thermorégulateur inséré entre la dalle inférieure et la dalle supérieure.

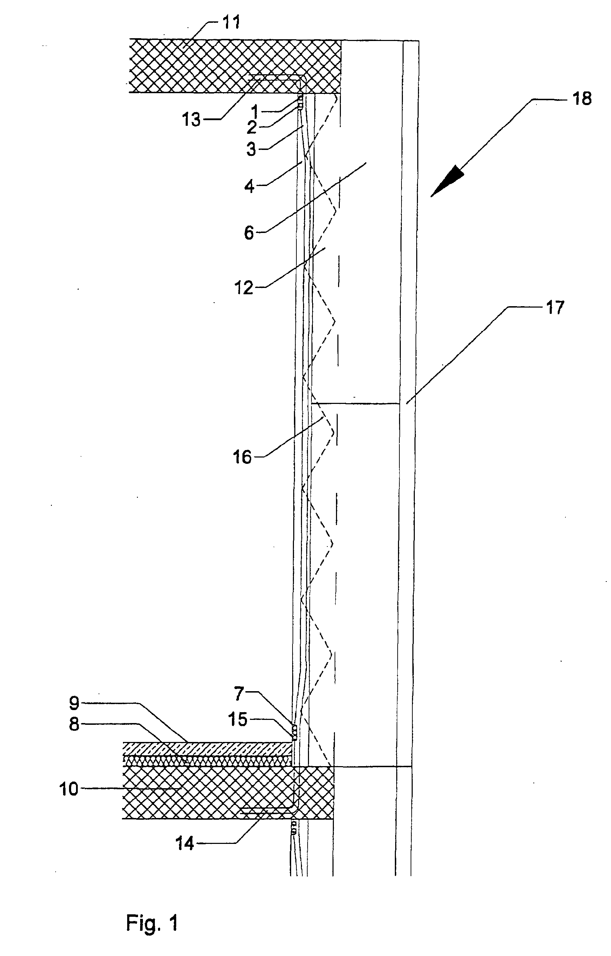

Sur le dessin de la fig. 1 on distingue le dispositif tubulaire 1,3,7 fixé au treillis et aux raidisseurs 16, le tout noyé dans le béton coulé 4 Sur le béton frais l'isolation 6 est insérée et reste fixé au moyen des tiges 5 après le séchage. Cette isolation peut être sous forme de polystyrène, polyuréthanne, liège ainsi que sous forme de diverses laines minérales. Une dernière couche d'isolation 17 sous forme de panneaux en laine de roche est fixée mécaniquement et par collage sur l'isolation 6, ce qui constitue une excellente résistance au feu.

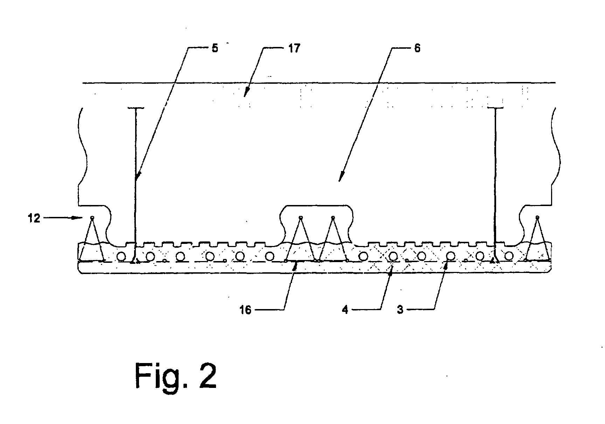

Sur le dessin de la fig.2 on distingue le béton coulé 4, le treillis avec les raidisseurs 16 sur lequel le dispositif tubulaire 3 est présenté à intervalles réguliers. L'évidement 12 prédécoupée dans l'isolation 6 à différentes dimensions et selon la nécessité de la statique du bâtiment est prêt à recevoir du béton fluide, soit directement sur place après la pose du mur ou directement en usine s'il s'agit de paroi pour la toiture. Les tiges de fixation mécanique 5 traversent l'isolation thermique. Un crochet situé à l'extrémité externe de la tige 5 renforce la tenue mécanique des couches. Une isolation thermique posée sur l'extrémité externe de la tige évite le pont de froid entre les couches.

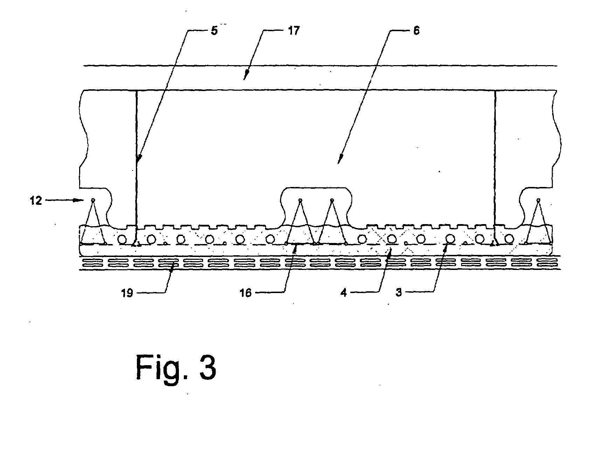

Sur le dessin de la fig. 3 on distingue le béton coulé 4 sur des plaques en terre cuite 19 prédisposées sur la table du coulage, le treillis avec les raidisseurs 16 sur lequel le dispositif tubulaire 3 est présenté à intervalles réguliers. L'évidement 12 prédécoupé dans l'isolation 6 à différentes dimensions et selon la nécessité de la statique du bâtiment est prête à recevoir du béton fluide soit directement sur place après la pose du mur ou en usine s'il s'agit de paroi pour la toiture. Les tiges de fixation mécanique 5 traversent l'isolation thermique. Un crochet situé à l'extrémité externe de la tige 5 renforce la tenue mécanique des couches. Une isolation thermique posée sur l'extrémité externe de la tige 5 évite le pont de froid entre les couches.

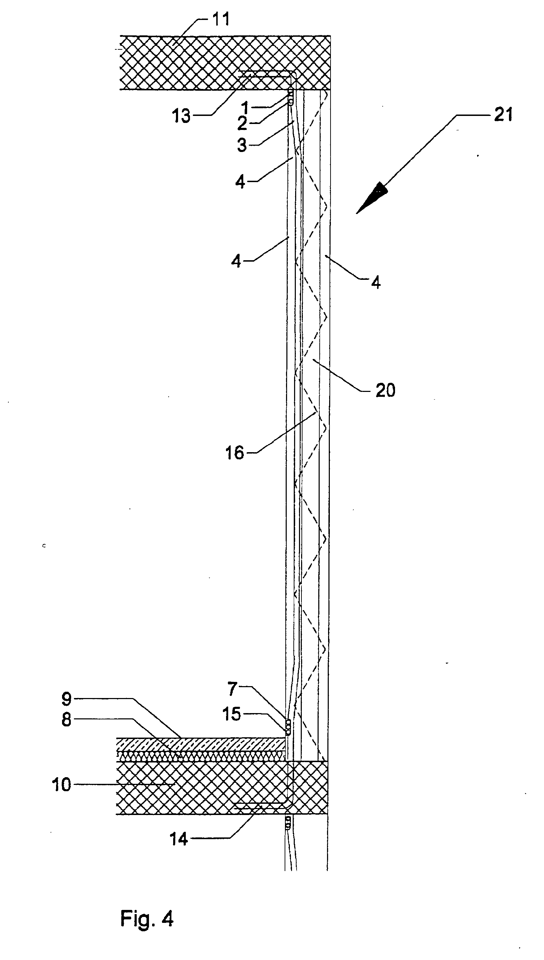

Sur le dessin de la fig. 4 on distingue le dispositif tubulaire(1,3,7) fixé au treillis et aux raidisseurs(16), le tout noyé dans le béton coulé(4). Le béton(20) est coulé sur le chantier. L'ensemble représente un mur porteur thermorégulateur préfabriqué(21).

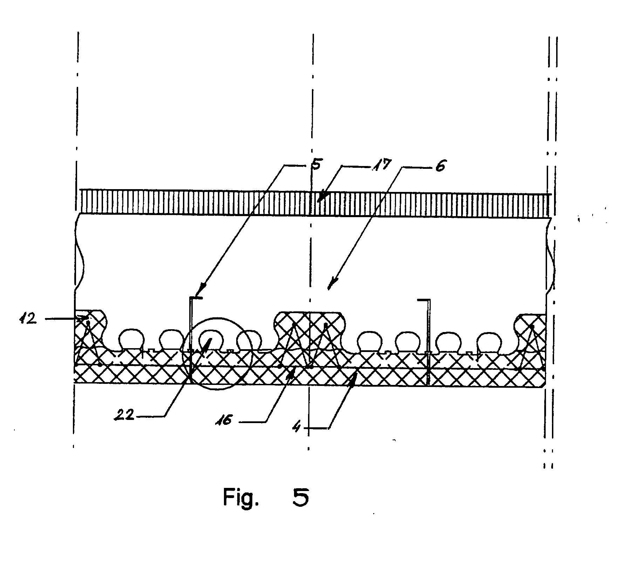

Sur le dessin de la fig. 5 on distingue le béton coulé 4, le treillis avec les raidisseurs 16. L'évidement 12 prédécoupé dans l'isolation 6 à dimension variable selon la nécessité de la statique du bâtiment et prêt à recevoir du béton fluide, soit directement sur place après la pose du mur ou directement à l'usine s'il s'agit d'une paroi pour la toiture. Les tiges de fixation mécanique 5. Les évidements 22 prédécoupés dans l'isolation 6 permettent la circulation d'air pour réchauffer ou refroidir la masse su béton 4.

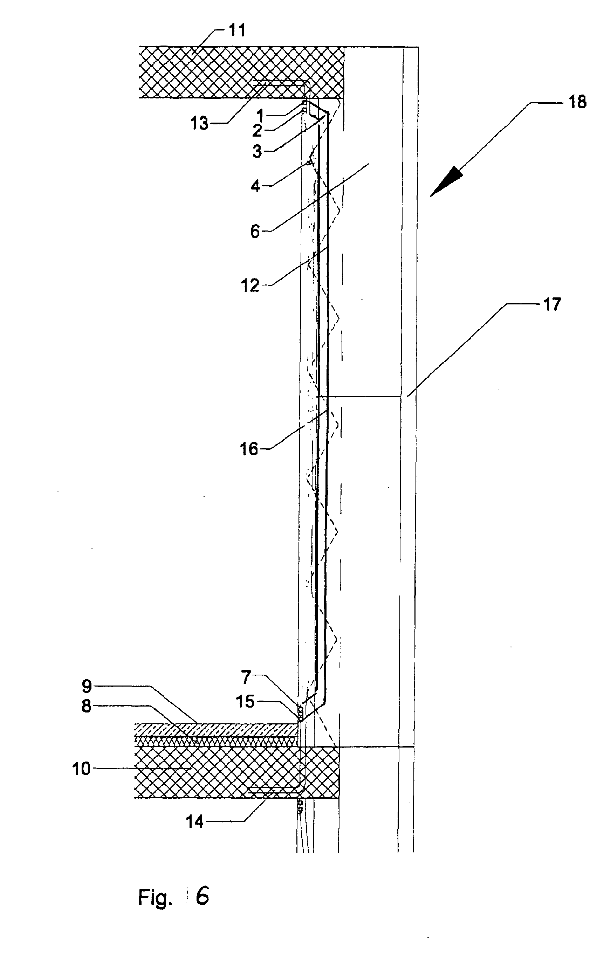

Sur le dessin de la fig.6 on distingue treillis et raidisseurs 16, le tout noyé dans le béton coulé 4. Sur le béton frais l'isolation 6 est insérée et reste fixée au moyen des tiges 5 après le séchage. Cette isolation peut être sous forme de polystyrène, de polyuréthanne, liège ainsi que sous formes de divers laines minérales.

## Revendications

1. Système de mur thermorégulateur préfabriqué(18), qui comprend un noyau en béton(4) coulé sur un dispositif tubulaire(1,3,7)et protégé extérieurement par d'épaisses couches d'isolations(6,17) insérées simultanément au coulage; le tout constituant un mur porteur(18).

2. Système selon la revendication 1, **caractérisé en ce que** le dispositif tubulaire composé de deux distributeurs horizontaux (inférieur(7) et supérieur(1)) reliés par des canaux verticaux(3) permette la circulation de fluides dans le but de tempérer le noyau (4).

3. Système selon l'une des revendications 1 à 2, **caractérisé en ce que** le béton(4) peut être constitué d'éléments à coefficients de transmission de chaleur élevés, soit de minéraux inorganiques.

4. Système selon l'une des revendications 1 à 3, **caractérisé en ce que** le béton peut être coulé sur des plaques en terre cuite permettant l'obtention d'une surface interne en terre cuite.

5. Système selon l'une des revendications 1 à 4, **caractérisé en ce que** l'isolation(6) est prédécoupée en forme de noppes, ce qui favorise la fixation mécanique entre l'isolation(6) et le béton(4).

6. Système selon l'une des revendications 1 à 5, **caractérisé en ce que** l'isolation(6) est prédécoupée de telle sorte qu'à intervalles réguliers des évidements(12) permettant le coulage des piliers(12) sont prévus.

7. Système selon l'une des revendications 1 à 6, **caractérisé en ce que** les couches d'isolation(6, 17) présentent ensemble un coefficient de transmission thermique d'une valeur minimale souhaitable de 0.12 W/m2K.

8. Système selon l'une des revendications 1 à 7, **caractérisé en ce que** la fixation supplémentaire entre l'isolation (6) et le béton (4 ) est renforcée par une tige (5) munie à son extrémité externe d'un crochet thermiquement isolé.

9. Système selon l'une des revendications 1 à 8, **caractérisé en ce que** le mur thermorégulateur préfabriqué(18) peut également servir d'élément de toiture ; dans ce cas de figure, les piliers(12) seront coulés et armés directement en usine.

10. Système selon l'une des revendications 1 à 5, **caractérisé en ce que** le béton(4) coulé aie la dimension statique nécessaire en ce qui concerne sa largeur. Le tout constituant un mur porteur.

11. Système selon l'une des revendications 1 à 9, **caractérisé en ce que** la couche d'isolation (6) est prédécoupée de telle sorte qu'à intervalles réguliers des évidements (22) permettent la circulation de fluides dans le but de tempérer le noyau( 4).
